Europäisches Patentamt

**European Patent Office**

**Office européen des brevets**

(11) Publication number: **0 063 643**
A2

# EUROPEAN PATENT APPLICATION

(21) Application number: **81110075.9**

(22) Date of filing: **02.12.81**

(51) Int. Cl.³: **G 11 B 5/60**, G 11 B 17/32

(30) Priority: **24.04.81 US 257064**

(71) Applicant: **International Business Machines Corporation, Armonk, N.Y. 10504 (US)**

(72) Inventor: **Feliss, Norbert Anthony, 5457 Century Plaza Way, San Jose California 95111 (US)**
Inventor: **Lile, Tim Winton, 674 Mary Evelyn Drive, San Jose California 95123 (US)**

(74) Representative: **Hobbs, Francis John, IBM United Kingdom Patent Operations Hursley Park, Winchester Hants, SO21 2JN (GB)**

(43) Date of publication of application: **03.11.82 Bulletin 82/44**

(84) Designated Contracting States: **DE FR GB IT NL**

(54) **Arrangement of transducer head slider in magnetic disk file.**

(57) In a magnetic disk file the longitudinal rails (20, 22) of an airbearing head slider (12) are skewed at a predetermined angle relative to the tangential line (28) to the path of the data track on a disk surface to prevent particle contaminants from impacting and damaging the head transducers (14, 16) which are located at the trailing edge of the head slider.

The skew angle $\theta_c$ is equal to $\tan^{-1}(W/L)$ where W is the width of the outer rail of the slider and L is the length of the slider.

SA9-80-041                        1

## ARRANGEMENT OF TRANSDUCER HEAD SLIDER IN
## MAGNETIC DISK FILE

This invention relates to magnetic disk files.

An object of this invention is to provide a magnetic disk file in which the damaging effect of particle debris is minimized.

A major problem found in disk file operation is the wear of magnetic heads caused by debris particles that are generated during disk file operation, by the mechanical effects of head accessing, disk rotation and vibration, for example.

The airborne particles are of minute size, in the range of 0.1-40 microns in diameter. As the disk file is used more and more, there is a significant increase in the amount of particle contaminants that are generated. As a result, the disk file experiences head crashes against the disk surfaces, which damage both the heads and disks and generates additional debris particles. Debris and head crashes may result in a loss of data, cause a reduction in reliability of the file, affect the integrity of the data being recorded and read out, and lead to possible machine failure.

Conventionally, air filters, critical air flow paths, and meticulously cleaned disk assembly parts are employed to eliminate the contaminants. However, these methods, which add to the cost of production and maintenance, reduce the amount of contaminants, but are not 100% effective.

An example of a type of magnetic head air bearing slider that encounters such problems is described in U.S. Patent 3,855,625. The head slider is formed with side rails with a recessed area therebetween, and one or more magnetic transducers are disposed at the trailing edge of the slider adjacent to the side rails. When positioned in a disk file in accordance with prior art practice, the slider rails are substantially parallel to the tangential velocity vector of the rotating disk. In such case, debris and contaminant particles appearing in the area of the slider will follow a wake pattern or path from the leading edge to the trailing edge of the slider with the high probability of severely impacting the transducer elements.

A magnetic disk file comprising: a record disk; a head slider including a transducer for interacting with the record disk, the side of the slider facing the record disk being provided with parallel inner and outer longitudinal rails for providing an air bearing surface and the transducer being disposed at the trailing edge of the slider; and a suspension arm for supporting the slider so that the transducer is over a predetermined circular record track on the record disk; is characterised, according to the invention, by the slider being so mounted on the suspension arm that its leading edge is skewed away from the centre of the record disk, the skew angle between the tangential line of the predetermined record track and a line through the transducer parallel to the inner and outer rails of the slider being substantially equal to $\tan^{-1}(W/L)$, where W is the width of the outer rail of the slider, and L is the length of the slider.

How the invention can be carried out will now be described by way of example, with reference to the accompanying drawings, in which:

FIGURE 1 is a perspective view, partly broken away, illustrating the relation of a magnetic disk and magnetic head suspension and slider in a disk file, made in accordance with this invention;

FIGURES 2A and 2B are plan views of a head slider positioned in relation to a data track on the surface of the magnetic disk, in accordance with the prior art and in accordance with this invention respectively; and

FIGURES 3A and 3B are enlarged schematic views depicting the relation of the outer slider rail to the tangential path of the disk track, respectively for prior art head slider positioning and that of the present invention.

Similar reference numerals refer to similar elements throughout the drawings.

It should be understood that the different parts and elements are not depicted in realistic proportion, but some are shown enlarged for the purpose of explanation and visual clarity.

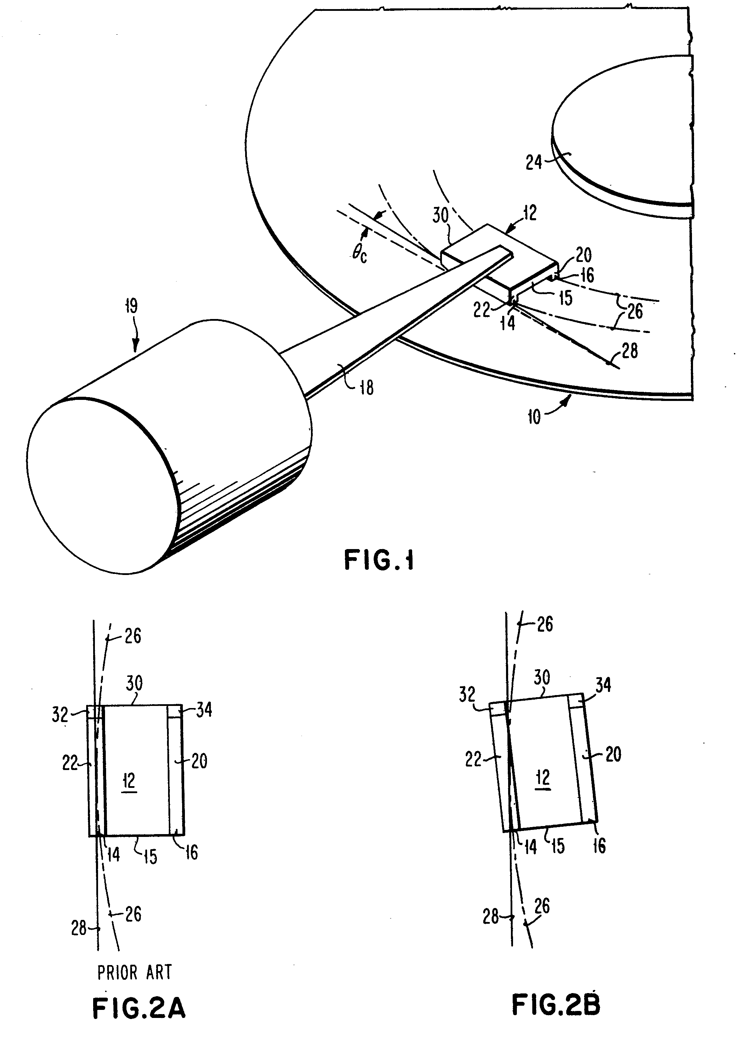

With reference to FIG. 1, a head/disk assembly includes a magnetic disk 10 and an air bearing magnetic head slider 12, having magnetic transducers 14 and 16 mounted at the trailing edge 15 of the slider in close transducing relation with the disk. The head slider is mounted to an arm suspension 18 that is attached to an actuator 19, such as a voice coil motor (partly shown), in a well-known manner. The head slider 12 is formed with inner and outer rails 20 and 22 respectively, bounding a recessed area, including positive and negative pressure regions, to provide a desired pressure distribution, so that a low load self-acting air bearing is provided. The inner rail 20 is defined as the one closer to the centre of the disk, whereas the outer rail is the rail that is closer to the periphery of the disk. Preferably the transducers 14, 16 are mounted at the trailing ends of the longitudinal rails. By means of this slider configuration, a substantially constant spacing between the surface of the rotating disk 10 and the head slider 12 and its transducers 14, 16 is maintained.

The magnetic disk 10 is mounted to a central hub 24 for rotation relative to the accessing magnetic head assembly. As the disk rotates during the record mode, substantially circular data tracks 26 are registered on the disk surface. These data tracks move at a velocity which is determined by the speed of rotation of the hub 24 driven by a motor (not shown). As the disk and the data tracks rotate, a tangential velocity vector line 28 is defined at any given point along each circular track 26.

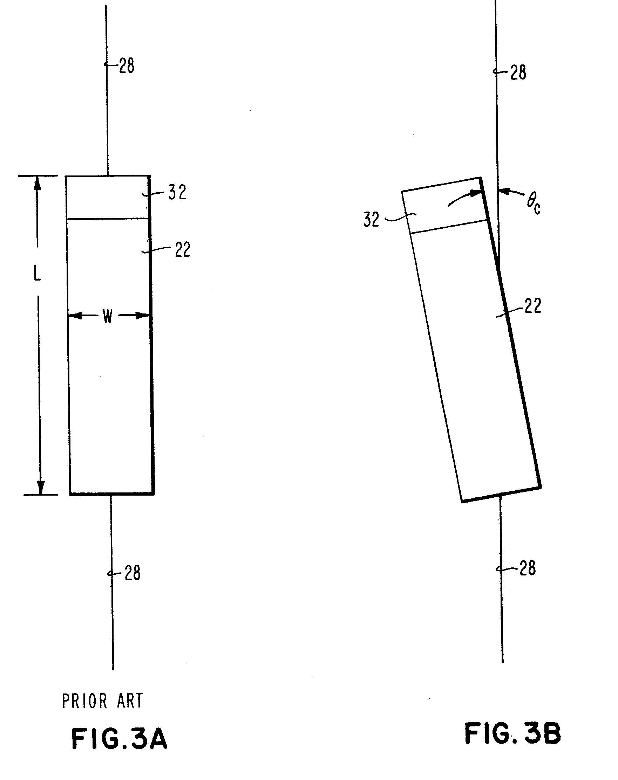

It has been determined that, in prior art disk files, debris particles that appear at the leading edge 30 of the slider adjacent to tapered portions 32, 34 are pushed into the disk surface under the leading edge of the slider, and are fractured into smaller particles. These particles of reduced size are swept into a wake between the slider rails and the disk surface, and then impact the trailing edge of the slider, including the transducers 14, 16. As a result, the slider and transducers experience abrasion and undue wear, for those cases where the slider rails are parallel to the tangential velocity vector 28, as shown in FIGS. 2A and 3A.

In accordance with this invention, and as illustrated in FIGS. 2B and 3B, the slider 12 is positioned so that the rails are skewed at a predetermined critical angle $\theta_c$ relative to the tangential velocity vector line. The angle $\theta_c$ is a critical angle that is defined as $\theta_c = \tan^{-1}(W/L)$, where W is the width of the slider rail adjacent to the data track and L is the length of the head slider. In a typical embodiment, a skew angle of 10° was employed for a slider having a length of about 5.0 mm and rail width of about 0.7 mm.

The skew may be effected by joining the slider body 12 to the arm, by means of epoxy for example, at the desired predetermined angle. In those cases where an array of head sliders and arms are mounted in a comb-like structure for transducing interaction with a stack of magnetic disks, the unitary arm structure may be skewed at the predetermined angle relative to the actuator which is movable linearly and radially relative to the disk surfaces.

The skewing of the head slider and the slider rails relative to the tangential velocity vector of the disk track being written or read effectively eliminates particle contact and wear at the trailing edge of the slider where the transducers are disposed. Airborne particles greater than or equal to the average flying height of the head slider are trapped and fragmented by the leading edge taper of the slider. The wear debris is dispersed into the viscous fluid stream directly behind the taper and along the tangential velocity vector, and away from the trailing edge transducers.

The skewing of the head slider reduces or eliminates the need for filter mechanisms and other critical parts of an air circulating system, and the invention can be implemented at minimal cost.

CLAIMS

1.    A magnetic disk file comprising:  a record disk (10); a head slider (12) including a transducer (14,16) for interacting with the record disk, the side of the slider facing the record disk being provided with parallel inner and outer longitudinal rails (20,22) for providing an air bearing surface and the transducer being disposed at the trailing edge of the slider; and a suspension arm (18) for supporting the slider so that the transducer is over a predetermined circular record track on the record disk; is characterised by the slider being so mounted on the suspension arm that its leading edge is skewed away from the centre of the record disk, the skew angle between the tangential line (28) of the predetermined record track and a line through the transducer parallel to the inner and outer rails of the slider being substantially equal to $\tan^{-1}(W/L)$, where W is the width of the outer rail of the slider, and L is the length of the slider.

2.    A magnetic disk file as claimed in claim 1, wherein the skew angle is in the range of 4 to 10 degrees.

3.    A magnetic disk file as claimed in claim 1, in which the transducer is fixed to the trailing edge of the inner or the outer rail of the slider.

0063643

1/2

FIG.1

PRIOR ART

FIG.2A

FIG.2B

PRIOR ART

FIG.3A

FIG.3B